# EUROPÄISCHE PATENTSCHRIFT

(11) **EP 0 894 598 B1**
(45) Veröffentlichungstag und Bekanntmachung des Hinweises auf die Patenterteilung: **25.09.2002**
(21) Anmeldenummer: 98112635.2
(22) Anmeldetag: 08.07.1998
(51) Int. Cl.: B29C 35/16, B29C 63/00

(54) **Verfahren und Beschleunigungskörper zur Luftkühlung eines aushärtbaren Schlauchs**
Method and structure for the accelerated air cooling of a curable hose
Procédé et structure pour le refroidissement accéléré d'un tuyau durcissable

(30) Priorität: 01.08.1997 DE 19733225
(43) Veröffentlichungstag der Anmeldung: 03.02.1999
(73) Patentinhaber: BKP Berolina Polyester GmbH & Co. KG, 13591 Berlin (DE)
(72) Erfinder: Auer, Helmut Dipl.-Kaufmann, 14089 Berlin (DE); Odenwald, Ralf Dipl.-Ing., 16727 Velten (DE)
(74) Vertreter: KOHLER SCHMID + PARTNER

(56) Entgegenhaltungen:
- WO-A-92/16784
- WO-A-96/18493
- BE-A- 621 614

## Beschreibung

Die Erfindung betrifft in einem ersten Aspekt ein Verfahren zum Kühlen eines ein Rohr oder dgl. auskleidenden Schlauchs mit aushärtbarer Schlauchwand.

Nicht begehbare schadhafte Rohrleitungen werden mit sogenannten Relining-Verfahren saniert, wobei vor Ort aus aushärtbaren Formmassen ein Neurohr erstellt wird. Dazu wird ein mit aushärtbarem Kunstharz getränkter Schlauch in ein zu sanierendes Altrohr eingeführt, positioniert und vor Ort ausgehärtet, wobei als aushärtbares Kunstharz meist wärmeoder lichthärtende Harze verwendet werden. Nachdem der Schlauch mittels Druckluft an die Innenwandung des Altrohrs angepreßt ist, wird eine Aushärteeinrichtung (Wärmequelle oder Lampe) mit möglichst gleichbleibender Geschwindigkeit durch den Schlauch gezogen. Unter dem Einfluß der abgestrahlten Wärme bzw. des Lichts härtet dann das Harz aus.

Während der Aushärtung des Schlauchs wird eine nicht unerhebliche Wärmemenge freigesetzt. Je nach Umgebungsbedingung - Härtungsgeschwindigkeit, Harzmenge, Wandstärke des Schlauchs, Wärmeableitung ins Erdreich und vorbeiströmende Luftmenge - kann sich am Schlauch eine Oberflächentemperatur von 120 °C und mehr einstellen. Diese hohen Temperaturen sind der die Innenwandung des Schlauchs bildenden Innenfolie nicht gerade zuträglich, so daß diese regelrecht auf das ausgehärtete Material aufkaschiert werden kann. Da nach Abschluß der Härtung diese Innenfolie wieder entfernt werden soll, kommt es zum Abreißen der Innenfolie, die folglich nicht vollständig entfernt werden kann. Die noch am Schlauch befindlichen Teile der Innenfolie müssen dann mit Hilfe eines Hochdruckspülers aufwendig entfernt werden, was jedoch nicht immer gelingt. Neben einer unschönen Optik kann Verstopfung des Neurohrs oder des Filters einer Kläranlage die Folge sein.

Es ist daher die Aufgabe der Erfindung, ein Kühlverfahren zu schaffen, mit dem die beim Aushärten des Schlauchs an seiner Innenwandung auftretenden Oberflächentemperaturen reduziert werden können.

Diese Aufgabe wird erfindungsgemäß durch ein Kühlverfahren gemäß Anspruch 1 gelöst, bei dem ein den luftströmungsquerschnitt innerhalb des Schlauchs auf einen an die Schlauchwand angrenzenden Spalt, vorzugsweise Ringspalt, reduzierender Luft-Beschleunigungskörper durch den Schlauch bewegt wird.

Durch dieses erfindungsgemäße Kühlverfahren wird der Strömungsquerschnitt für die innerhalb des Schlauchs befindliche Luft verringert, wodurch sich im reduzierten Strömungsquerschnitt die Strömungsgeschwindigkeit der Luft entsprechend erhöht. Durch die mit erhöhter Geschwindigkeit vorbeiströmende Luft wird die Innenwandung des Schlauchs gekühlt, und es stellt sich eine geringere Oberflächentemperatur an der Innenwandung ein. Dies führt z.B. dazu, daß sich eine die Innenwandung des Schlauchs zunächst bildende Innenfolie nicht stoffschlüssig mit dem ausgehärteten Material verbindet und an einem Stück nach Abschluß der Aushärtung vom ausgehärteten Material vom ausgehärteten Material abgezogen und entfernt werden kann.

Bei einer besonders bevorzugten Ausgestaltung des Kühlverfahrens wird durch die Bewegung des Beschleunigungskörpers eine turbulente Luftströmung im Schlauch erzeugt, um von der Innenwandung des Schlauchs möglichst viel Wärme abführen zu können. Die turbulente Strömung kann sich hinter dem Beschleunigungskörper wie auch im Spalt zwischen Schlauchwand und Beschleunigungskörper einstellen.

Aus der BE 62 16 14 A ist ein Verfahren zum Beschichten eines Mantelrohrs mit einem Innenrohr aus thermoplastischen Material bekannt. Dazu wird das Innenrohr mittels eines hindurchgezogenen Körpers zunächst erwärmt, dann auf den Innendurchmesser des Mantelrohrs aufgeweitet und schließlich wieder abgekühlt, so daß die Verformung des Innenrohrs eingefroren wird. Der Körper hat einen vorderen Abschnitt, dessen Außendurchmesser dem anfänglichen Innendurchmesser des Innenrohrs entspricht und der eine Heizeinrichtung trägt, einen mittleren Abschnitt, der sich konisch auf den gewünschten Innendurchmesser des Innenrohrs aufweitet, und einen hinteren Abschnitt, der gegenüber dem mittleren Abschnitt unter Ausbildung eines Ringspalts radial zurückspringt und eine Kühleinrichtung trägt. Durch die Kühleinrichtung wird Kaltwasser in den Ringspalt geleitet, um das erwärmte und aufgeweitete Innenrohr abzukühlen.

Besonders bevorzugt wird der Beschleunigungskörper zentriert zur Achse des Schlauchs durch den Schlauch bewegt, wodurch zwischen Schlauchwand und Beschleunigungskörper ein Ringspalt mit ringsum gleicher Spaltbreite ausgebildet und die Innenwandung ringsum gleichmäßig gekühlt wird. Der Beschleunigungskörper kann über spezielle Zentriermittel zentriert zur Schlauchachse schwebend oder über Abstandshalter auf dem Schlauch aufliegend geführt sein, wobei diese Abstandshalter auch in ihrem Auflagebereich möglichst einen ausreichenden Spalt zwischen Schlauchwand und Beschleunigungskörper freilassen.

Um die durch eine Aushärteeinrichtung erwärmte Schlauchwand möglichst sofort abkühlen zu können, wird der Beschleunigungskörper gemeinsam mit einer in Bewegungsrichtung vor ihm angeordneten Aushärteeinrichtung durch den Schlauch bewegt. Vorzugsweise ist zumindest der letzten von mehreren in einer Reihe angeordneten Aushärteeinrichtungen ein Beschleunigungskörper nachgeordnet.

Um die Strömungsgeschwindigkeit der Luft im reduzierten Strömungsquerschnitt noch weiter zu erhöhen, kann bei ganz besonders bevorzugter Ausgestaltung des Kühlverfahrens die in Bewegungsrichtung vor dem Beschleunigungskörper befindliche Luft zusätzlich in Richtung auf den Beschleunigungskörper beschleunigt werden.

Dazu kann die vor dem Beschleunigungskörper befindliche Luft entweder druckbeaufschlagt oder hinter dem Beschleunigungskörper angesaugt werden.

Die Erfindung betrifft in einem weiteren Aspekt auch einen Luft-Beschleunigungskörper gemäß Anspruch 8 zum Kühlen eines ein Rohr oder dgl. auskleidenden Schlauchs mit aushärtbarer Schlauchwand, insbesondere um das oben geschilderte Kühlverfahren durchzuführen.

Dazu weist der Luft-Beschleunigungskörper einen den Luftströmungsquerschnitt des Schlauchs auf einem an die Schlauchwand angrenzenden Spalt reduzierenden Außenquerschnitt auf. Durch diese Verringerung des lichten Schlauchquerschnitts wird die Strömungsgeschwindigkeit der aufgrund der Bewegung des Beschleunigungskörpers in entgegengesetzter Richtung vorbeiströmenden Luft erhöht und kann entsprechend mehr Wärme von der Schlauchwandung abgeleitet werden.

Bei besonders bevorzugten Ausführungsformen des Beschleunigungskörpers ist durch den Spalt der Luftströmungsquerschnitt des Schlauchs um mindestens 50 %, vorzugsweise um 70 %, besonders bevorzugt um mehr als 90 % reduziert. Je geringer der Spalt und damit der verbleibende Strömungsquerschnitt ist, desto größer ist die Strömungsgeschwindigkeit der den Spalt durch strömenden Luft und desto mehr Wärme kann abgeleitet werden.

Um den Schlauch auf seinem Umfang möglichst gleichmäßig zu kühlen, ist der Spalt als Ringspalt mit insbesondere ringsum gleicher Spaltbreite ausgebildet.

Um den Beschleunigungskörper möglichst windschnittig, d.h. mit möglichst geringem Luftwiderstand durch den Schlauch bewegen zu können, verjüngt sich bei einer bevorzugten Ausführungsform des Beschleunigungskörpers das in seiner Bewegungsrichtung vordere Ende in Bewegungsrichtung. Z.B. kann vordere Ende konisch zulaufen.

Damit der Beschleunigungskörper nicht durch eine in Bewegungsrichtung vor ihm angeordnete Aushärteeinrichtung aufgeheizt wird, ist die in seine Bewegungsrichtung weisende Außenfläche verspiegelt. Durch eine solche Verspiegelung kann der Beschleunigungskörper außerdem näher an eine Aushärteeinrichtung angeordnet werden.

Wenn die dem Schlauch zugewandte Außenoberfläche des Beschleunigungskörpers, gesehen in Bewegungsrichtung, uneben, insbesondere wellig ausgebildet ist, kann zwischen Schlauchwand und Außenoberfläche des Beschleunigungskörpers eine turbulente Strömung erzeugt werden.

Bevorzugt ist der Beschleunigungskörper zylinderförmig, damit die am Beschleunigungskörper vorbeiströmende Luft auf einem möglichst langen axialen Abschnitt mit der Schlauchwand wechselwirken kann.

Damit einer durch eine Aushärteeinrichtung bewirkten Erwärmung des Schlauchs möglichst sofort entgegengewirkt werden kann, ist der Beschleunigungskörper möglichst unmittelbar hinter einer durch den Schlauch bewegten Aushärteeinrichtung angeordnet, so daß Beschleunigungskörper und Aushärteeinrichtung als Einheit gemeinsam durch den Schlauch bewegt werden können.

Um die Strömungsgeschwindigkeit der Luft im reduzierten Strömungsquerschnitt noch weiter zu erhöhen, kann stirnseitig am Beschleunigungskörper ein Axialgebläse vorgesehen sein. Ist das Axialgebläse in der Bewegungsrichtung des Beschleunigungskörpers hinter diesem angeordnet, so wird die vor dem Beschleunigungskörper befindliche Luft zusätzlich durch den reduzierten Strömungsquerschnitt angesaugt.

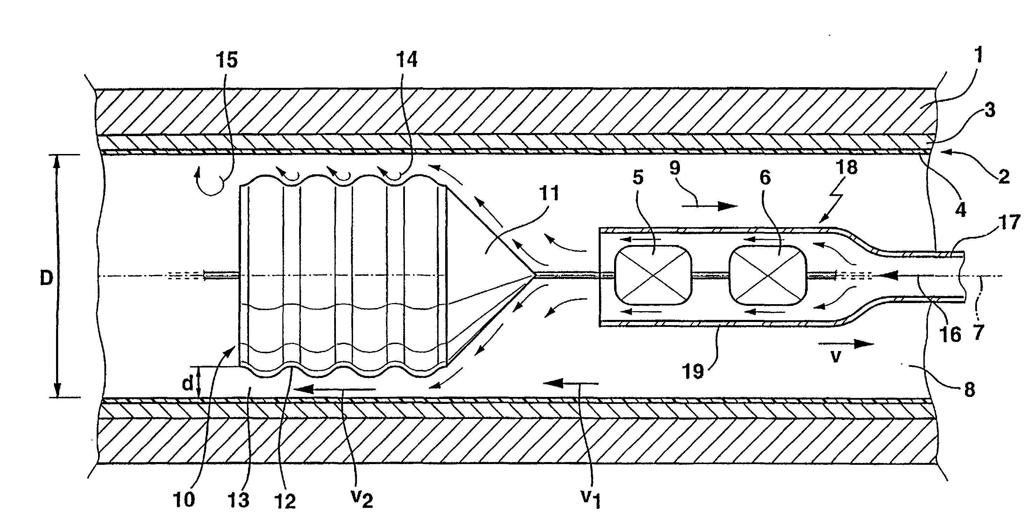

Weitere Vorteile der Erfindung ergeben sich aus der Beschreibung und der Zeichnung. Ebenso können die vorstehend genannten und die noch weiter aufgeführten Merkmale erfindungsgemäße jeweils einzeln für sich oder zu mehreren in beliebigen Kombinationen Verwendung finden. Die gezeigte und beschriebene Ausführungsformen ist nicht als abschließende Aufzählung zu verstehen, sondern hat vielmehr beispielhaften Charakter für die Schilderung der Erfindung.

Die einzige Figur der Zeichnung zeigt in einem Längsschnitt ein mit einem aushärtbaren Schlauch ausgekleidetes Rohr sowie einen gemeinsam mit Aushärteeinrichtungen durch den Schlauch hindurchbewegten Luft-Beschleunigungskörper.

In der Figur ist ein zu sanierendes Rohr 1 gezeigt, das innen mit einem aushärtbaren Schlauch 2 ausgekleidet ist. Dazu weist der Schlauch 2 eine aushärtbare Schlauchwand 3 auf, deren Innenwandung durch eine in sich geschlossene Innenfolie 4 gebildet ist. In der aushärtbaren Schlauchwand 3 befindet sich aushärtbares Material, z.B. ein durch Licht oder Wärme aushärtbares Kunstharz.

Zum Aushärten des Schlauchs 2 werden eine oder mehrere Aushärteeinrichtungen 5, 6 möglichst zentriert zur Schlauchachse 7 durch den Innenraum 8 des Schlauchs 2 in Bewegungsrichtung 9 hindurchgeführt. In Bewegungsrichtung 9 hinter der letzten Aushärteeinrichtung 5 wird ein an die letzte Aushärteeinrichtung 5 angehängter Beschleunigungskörper 10 mitbewegt, wobei die Bewegungsgeschwindigkeit des Beschleunigungskörpers 10 bzw. der Aushärteeinrichtung 5, 6 mit v bezeichnet ist.

Der Beschleunigungskörper 10 ist zylinderförmig ausgebildet, wobei sich sein in Bewegungsrichtung 9 vorderes Ende konisch zur Schlauchachse 7 verjüngt. Die dem Schlauch 2 zugewandte Außenoberfläche 12 des Beschleunigungskörpers 10 ist mit einer, gesehen in Bewegungsrichtung 9, welligen Struktur versehen. Der Außenquerschnitt des ebenfalls möglichst zentriert zur Schlauchachse 7 bewegten Beschleunigungskörpers 10 ist derart auf den Innen- oder Öffnungsdurchmesser D des Schlauchs 2 abgestimmt, daß der Luftströmungsquerschnitt des Schlauchs 2 auf einen an die Schlauchwand 3 bzw. die Innenfolie 4 angrenzenden Ringspalt 13 der Spaltbreite d reduziert wird.

Wenn der Beschleunigungskörper 10 in Bewegungsrichtung 9 mit der Geschwindigkeit v bewegt wird, wird die vor ihm im Schlauch 2 befindliche Luft durch sein konisches vorderes Ende 11 nach außen verdrängt, und aufgrund des reduzierten Strömungsquerschnitts im Ringraum 13 wird die Strömungsgeschwindigkeit der Luft ausgehend von der Strömungsgeschwingigkeit v₁ vor dem Beschleunigungskörper 10 im Ringraum 13 auf eine höhere Strömungsgeschwindigkeit v₂ beschleunigt. Aufgrund der welligen Außenoberfläche 12 bildet sich im Ringspalt 13 eine turbulente Strömung 14 sowie hinter dem Beschleunigungskörper 10 ebenfalls eine turbulente Strömung 15 aus. Durch die erhöhte Strömungsgeschwindigkeit v₂ und die Turbulenzen 14, 15 wird von der Innenwandung des Schlauchs 2 Wärme abgeführt, d.h., die Innenwandung wird gekühlt.

Damit der Beschleunigungskörper 10 nicht durch die von den Aushärteeinrichtungen 5, 6 abgestrahlte Wärme bzw. Licht aufgeheizt wird, ist das den Aushärteeinrichtungen 5, 6 zugewandte konische vordere Ende 11 verspiegelt.

Um die Strömungsgeschwindigkeit im Ringspalt 13 noch weiter zu erhöhen bzw. um die Kühlwirkung an der Schlauchwand 3 zu verbessern, wird Druckluft 16 in den Schlauch 2 in Richtung auf das vordere Ende 11 des Beschleunigungskörpers 10 über eine Druckluftleitung 16 eingeleitet.

Diese Druckluft 16 wird, bevor sie in das Innere des Schlauchs 2 austritt, auch noch zum Abkühlen der beiden Aushärteeinrichtungen 5, 6 an diesen vorbeigeleitet. Insbesondere wenn die Aushärteeinrichtungen 5, 6 Lampen sind, können an den Lampen sehr hohe Temperaturen auftreten. Um ein direktes Berühren eines sich von dem Rohr 1 abgelösten Abschnitts der Schlauchwand 2 mit den Lampen zu verhindern und um die Druckluft 16 gezielt an den Lampen vorbeizuführen, sind die Lampen von einem die Druckluft 16 leitenden Gehäuse 18 mit einer Glaswand 19 umgeben. Das abgestrahlte Licht der Lampen kann so durch das Gehäuse 18 ungehindert durchtreten. Zum Kühlen eines ein Rohr (1) oder dgl. auskleidenden Schlauchs (2) mit aushärtbarer Schlauchwand (3) wird erfindungsgemäß ein den Luftströmungsquerschnitt innerhalb des Schlauchs (2) auf einen an die Schlauchwand (3) angrenzenden Spalt, vorzugsweise Ringspalt (13), reduzierender Luft-Beschleunigungskörper (10) durch den Schlauch (2) bewegt. Durch die mit erhöhter Geschwindigkeit am Beschleunigungskörper vorbeiströmende Luft wird die Innenwandung des Schlauchs gekühlt, so daß sich an der Innenwandung eine geringere Oberflächentemperatur einstellt.

## Patentansprüche

1. Verfahren zum Kühlen eines ein Rohr (1) oder dgl. auskleidenden Schlauchs (2) mit aushärtbarer Schlauchwand (3), bei dem ein den Luftströmungsquerschnitt innerhalb des Schlauchs (2) auf einen an die Schlauchwand (3) angrenzenden Spalt, vorzugsweise Ringspalt (13), reduzierender Luft-Beschleunigungskörper (10) durch den Schlauch (2) bewegt wird.

2. Kühlverfahren nach Anspruch 1, **dadurch gekennzeichnet, daß** durch die Bewegung des Beschleunigungskörpers (10) im Schlauch (3) eine turbulente Luftströmung erzeugt wird.

3. Kühlverfahren nach Anspruch 1 oder 2, **dadurch gekennzeichnet, daß** der Beschleunigungskörper (10) zentriert zur Achse (7) des Schlauchs (2) durch den Schlauch (2) bewegt wird.

4. Kühlverfahren nach einem der vorhergehenden Ansprüche, **dadurch gekennzeichnet, daß** der Beschleunigungskörper (10) gemeinsam mit einer in Bewegungsrichtung (9) vor ihm angeordneten Aushärteeinrichtung (5, 6) durch den Schlauch (2) bewegt wird.

5. Kühlverfahren nach einem der vorhergehenden Ansprüche, **dadurch gekennzeichnet, daß** die in Bewegungsrichtung (9) vor dem Beschleunigungskörper (10) befindliche Luft zusätzlich in Richtung auf den Beschleunigungskörper (10) beschleunigt wird.

6. Kühlverfahren nach Anspruch 5, **dadurch gekennzeichnet, daß** die vor dem Beschleunigungskörper (10) befindliche Luft druckbeaufschlagt wird.

7. Kühlverfahren nach Anspruch 5 und 6, **dadurch gekennzeichnet, daß** die vor dem Beschleunigungskörper (10) befindliche Luft hinter dem Beschleunigungskörper angesaugt wird.

8. Luft-Beschleunigungskörper (10) zum Kühlen eines ein Rohr (2) oder dgl. auskleidenden Schlauchs (2) mit aushärtbarer Schlauchwand (3), insbesondere zur Durchführung des Kühlverfahrens nach einem der Ansprüche 1 bis 7, mit einem den Luftströmungsquerschnitt des Schlauchs (3) auf einen an die Schlauchwand (3) angrenzenden Spalt reduzierenden Außenquerschnitt.

9. Beschleunigungskörper nach Anspruch 8, **dadurch gekennzeichnet, daß** durch den Spalt der Luftströmungsquerschnitt des Schlauchs (2) um mindestens 50 %, vorzugsweise um 70 %, besonders bevorzugt um mehr als 90 % reduziert ist.

10. Beschleunigungskörper nach Anspruch 8 oder 9, **dadurch gekennzeichnet, daß** der Spalt als Ringspalt (13) ausgebildet ist.

11. Beschleunigungskörper nach einem der Ansprüche 8 bis 10, **dadurch gekennzeichnet, daß** sich das in Bewegungsrichtung (9) des Beschleunigungskörpers (10) vordere Ende (11) in Bewegungsrichtung (9), insbesondere konisch, verjüngt.

12. Beschleunigungskörper nach einem der Ansprüche 8 bis 11, **dadurch gekennzeichnet, daß** die in seine Bewegungsrichtung (9) weisende Außenfläche des Beschleunigungskörpers (10) verspiegelt ist.

13. Beschleunigungskörper nach einem der Ansprüche 8 bis 12, **dadurch gekennzeichnet, daß** die dem Schlauch (2) zugewandte Außenoberfläche des Beschleunigungskörpers (10), gesehen in Bewegungsrichtung (6), uneben, insbesondere wellig ausgebildet ist.

14. Beschleunigungskörper nach einem der Ansprüche 8 bis 13, **dadurch gekennzeichnet, daß** der Beschleunigungskörper (10) zylinderförmig ist.

15. Beschleunigungskörper nach einem der Ansprüche 8 bis 14, **dadurch gekennzeichnet, daß** der Beschleunigungskörper (10) möglichst unmittelbar hinter einer durch den Schlauch (3) bewegten Aushärteeinrichtung (5, 6) angeordnet ist.

16. Beschleunigungskörper nach einem der Ansprüche 8 bis 15, **dadurch gekennzeichnet, daß** stirnseitig am Beschleunigungskörper (10) ein Axialgebläse vorgesehen ist.

## Claims

1. A method of cooling a hose (2) lining a pipe (1) or the like and having a curable hose wall (3) in which an air acceleration body (10) is moved through the hose (2) reducing the gap, preferably annular gap (13), which is adjacent to the hose wall (3) and which reduces the air flow cross-section inside the hose (2).

2. A cooling method according to Claim 1, **characterised in that** a turbulent air flow is created in the hose (3) by the movement of the acceleration body (10).

3. A cooling method according to Claim 1 or 2, **characterised in that** the acceleration body (10) is moved to the hose (2) centrally in relation to the axis (7) of the hose (2).

4. A cooling method according to one of the preceding claims, **characterised in that** the acceleration body (10) is moved through the hose (2) together with a curing means (5, 6) disposed in front of it in the direction (9) of movement.

5. A cooling method according to one of the preceding claims, **characterised in that** the air present in front of the acceleration body (10) in the direction of movement (9) is additionally accelerated in the direction of the acceleration body (10).

6. A cooling method according to Claim 5, **characterised in that** the air preceding the acceleration body (10) is pressurised.

7. A cooling method according to Claim 5 and 6, **characterised in that** the air preceding the acceleration body (10) is sucked in behind the body of acceleration.

8. An air acceleration body (10) for cooling a hose (2) having a curable hose wall (3) and lining a pipe (1) or the like, particularly for carrying out the cooling method according to one of Claims 1 to 7, with an exterior cross-section reducing the air flow cross-section of the hose (3) to a gap adjacent the hose wall (3).

9. An acceleration body according to Claim 8, **characterised in that** the air flow cross-section of the hose (2) is reduced by at least 50% and preferably by 70% and especially preferably by more than 90% by the gap.

10. An acceleration body according to Claim 8 or 9, **characterised in that** the gap takes the form of an annular gap (13).

11. An acceleration body according to one of Claims 8 to 10, **characterised in that** the front end (11) of the acceleration body (10), in the direction (9) of movement, is tapered, particularly conically.

12. An acceleration body according to one of Claims 8 to 11, **characterised in that** the outer surface of the acceleration body (10) is mirrored in its direction (9) of movement.

13. An acceleration body according to one of Claims 8 to 12, **characterised in that** the outer surface of the acceleration body (10) which is towards the hose (2), when viewed in the direction of movement (6), is uneven, and is in particular undulating.

14. An acceleration body according to one of Claims 8 to 13, **characterised in that** the acceleration body (10) is cylindrical.

15. An acceleration body according to one of Claims 8 to 14, **characterised in that** the acceleration body (10) is disposed as far as possible directly behind a curing means (5, 6) which is moved through the hose (3).

16. An acceleration body according to one of Claims 8 to 15, **characterised in that** an axial blower is provided on the end face of the acceleration body (10).

## Revendications

1. Procédé pour faire refroidir un tuyau flexible (2) revêtant à l'intérieur un tube (1) ou similaire et comportant une paroi de tuyau durcissable (3), dans lequel on déplace un corps d'accélération d'air (10) à travers le tuyau (2), corps qui réduit la section d'écoulement d'air à l'intérieur du tuyau (2) à un intervalle adjacent à la paroi de tuyau (3), de préférence à un intervalle annulaire (13).

2. Procédé de refroidissement selon la revendication 1, **caractérisé en ce que** le mouvement du corps d'accélération (10) dans le tuyau (3) produit un écoulement d'air turbulent.

3. Procédé de refroidissement selon l'une ou l'autre des revendications 1 et 2, **caractérisé en ce que** le corps d'accélération (10) est déplacé à travers le tuyau (2) de façon centrée par rapport à l'axe (7) du tuyau (2).

4. Procédé de refroidissement selon l'une des revendications précédentes, **caractérisé en ce que** le corps d'accélération (10) est déplacé à travers le tuyau (2) conjointement avec un dispositif de durcissement (5, 6) agencé avant celui-ci en sens de déplacement (9).

5. Procédé de refroidissement selon l'une des revendications précédentes, **caractérisé en ce que** l'air situé avant le corps d'accélération (10) en sens de déplacement (9) est accéléré en supplément en direction du corps d'accélération (10).

6. Procédé de refroidissement selon la revendication 5, **caractérisé en ce que** l'air situé en avant du corps d'accélération (10) est mis sous pression.

7. Procédé de refroidissement selon l'une ou l'autre des revendications 5 et 6, **caractérisé en ce que** l'air situé en avant du corps d'accélération (10) est aspiré en arrière du corps d'accélération.

8. Corps d'accélération d'air (10) pour faire refroidir un tuyau flexible (2) revêtant à l'intérieur un tube (1) ou similaire et comportant une paroi de tuyau durcissable (3), en particulier pour mettre en oeuvre le procédé de refroidissement selon l'une des revendications 1 à 7, présentant une section extérieure qui réduit la section d'écoulement d'air du tuyau (2) à un intervalle adjacent à la paroi de tuyau (3).

9. Corps d'accélération selon la revendication 8, **caractérisé en ce qu'**au moyen de l'intervalle, la section d'écoulement d'air du tuyau (2) est réduite d'au moins 50 %, de préférence de 70 %, de manière particulièrement préférée de plus de 90 %.

10. Corps d'accélération selon l'une ou l'autre des revendications 8 et 9, **caractérisé en ce que** l'intervalle est réalisé sous forme d'intervalle annulaire (13).

11. Corps d'accélération selon l'une des revendications 8 à 10, **caractérisé en ce que** l'extrémité (11) avant en sens de déplacement (9) du corps d'accélération (10) va en se rétrécissant en sens de déplacement (9), en particulier en rétrécissement conique.

12. Corps d'accélération selon l'une des revendications 8 à 11, **caractérisé en ce que** la surface extérieure du corps d'accélération (10), dirigée dans sa direction de déplacement (9), est pourvue d'une couche réfléchissante.

13. Corps d'accélération selon l'une des revendications 8 à 12, **caractérisé en ce que** la surface extérieure du corps d'accélération (10), orientée vers le tuyau (2), est réalisée non plane, en particulier ondulée, vue en sens de déplacement (6).

14. Corps d'accélération selon l'une des revendications 8 à 13, **caractérisé en ce que** le corps d'accélération (10) est de forme cylindrique.

15. Corps d'accélération selon l'une des revendications 8 à 14, **caractérisé en ce que** le corps d'accélération (10) est agencé le plus possible immédiatement derrière d'un dispositif de durcissement (5, 6) déplacé à travers le tuyau (2).

16. Corps d'accélération selon l'une des revendications 8 à 15, **caractérisé en ce qu'**un ventilateur axial est prévu du côté frontal sur le corps d'accélération (10).
